(19) **Europäisches Patentamt**

**European Patent Office**

**Office européen des brevets**

(11) **EP 0 889 456 B1**

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(51) Int Cl.$^7$: **G08G 1/16**

(21) Anmeldenummer: **98112211.2**

(22) Anmeldetag: **02.07.1998**

(54) **Verfahren zur Steuerung einer automatischen Abstandsregelungsanlage für ein Kraftfahrzeug**

Method to control an automatic distance regulation system for a vehicle

Procédé de commande d'un appareil de contrôle de distance pour un véhicule

(84) Benannte Vertragsstaaten:
**DE FR GB**

(30) Priorität: **04.07.1997 DE 19728591**

(43) Veröffentlichungstag der Anmeldung:
**07.01.1999 Patentblatt 1999/01**

(73) Patentinhaber: **AUDI AG**
**85045 Ingolstadt (DE)**

(72) Erfinder:
• **van Meel, Franciscus**
**85113 Böhmfeld (DE)**
• **Beeskow, Ulrich**
**85049 Ingolstadt (DE)**

(56) Entgegenhaltungen:
**DE-A- 3 222 263**      **US-A- 5 521 579**

• **DATABASE WPI Section PQ, Week 199733 Derwent Publications Ltd., London, GB; Class Q17, AN 1997-354238 XP002132983 & JP 09 145737 A (HONDA MOTOR CO LTD), 6. Juni 1997 (1997-06-06) & US 5 699 040 A (S. MATSUDA) 16. Dezember 1997 (1997-12-16)**
• **DATABASE WPI Section EI, Week 199709 Derwent Publications Ltd., London, GB; Class S02, AN 1997-092102 XP002132984 & JP 08 329396 A (ISUZU MOTORS LTD), 13. Dezember 1996 (1996-12-13)**

**Beschreibung**

Die Erfindung betrifft ein Verfahren zur Steuerung einer automatischen Abstandsregelungsanlage für ein Kraftfahrzeug gemäß dem Oberbegriff des Anspruchs 1.

Seit längerem sind bei Kraftfahrzeugen sogenannte Tempomaten bekannt, die die Einhaltung einer vom Fahrer vorgegebenen Geschwindigkeit ermöglichen. Eine Steuereinheit führt die hierfür notwendigen Motormomenteingriffe automatisch durch. Derartige Einrichtungen eigenen sich nur bei geringer Verkehrsdichte.

Bei höherer Verkehrsdichte sind zur Kollisionsvermeidung Bremsbetätigungen durch den Fahrer unvermeidbar. Die vorgegebene Geschwindigkeit kann je nach Verkehrsdichte nur kurzfristig gehalten werden.

Seit kurzem sind auch Tempomaten mit integrierten Abstandsregelungsanlagen bekannt. Bei diesen Einrichtungen wird in erster Linie versucht, die vorgegebene Geschwindigkeit einzuhalten. Falls dies aber aufgrund der Verkehrsdichte nicht möglich ist, wird eine automatische Geschwindigkeitsanpassung durchgeführt. So ist jederzeit gewährleistet, daß der Sicherheitsabstand zum Vordermann nicht unterschritten wird.

Es sind verschiedene Verfahren zur Steuerung von Abstandsregelungsanlagen für Kraftfahrzeuge bekannt. Normalerweise wird bei derartigen Verfahren der Abstand und die Relativgeschwindigkeit zu einem vorausfahrenden Fahrzeug bestimmt und diese Meßgrößen in einer Steuereinheit ausgewertet.

Bei einer Annäherung an ein vorausfahrendes Fahrzeug sind mehrere Möglichkeiten zur automatischen Abbremsung des Bezugsfahrzeuges gegeben. Bei einer relativ langsamen Annäherung an das vorausfahrende Fahrzeug reicht eine Abbremsung aufgrund einer Motormomentreduktion aus, um einen sicheren Abstand einzuhalten. Bei einer relativ raschen Annäherung an das vorausfahrende Fahrzeug ist zusätzlich ein aktiver Bremseingriff notwendig. Dieser Bremseingriff erfolgt dadurch, daß die Steuereinheit der Abstandsregelungsanlage entsprechende Signale an ein Bremsstellglied gibt.

Da dieser Bremseingriff ohne Zutun des Fahrers erfolgt, ist die maximal mögliche automatische Verzögerung aus Sicherheitsgründen auf 3 m/s² begrenzt.

Zur Gewinnung der entsprechenden Größen, wie Abstand und Relativgeschwindigkeit, dienen z.B. optische Sensoren. Diese optischen Sensoren erlauben aber keine direkte Ermittlung des Abstands bzw. der Relativgeschwindigkeit. Hierfür ist eine aufwendige Bildverarbeitung notwendig. Ein Vorteil dieser optischen Sensoren liegt darin, daß mit ihrer Hilfe nicht nur eine Erfassung vorausfahrender Fahrzeuge, sondern auch der Umgebung einschließlich des Straßenverlaufs möglich ist.

Diesem Vorteil stehen aber erhebliche Nachteile entgegen. Die optische Bildverarbeitung ist sehr rechnerintensiv, d.h. die notwendigen elektronischen Auswertekomponenten sind aufwendig, teuer und benötigen einen erheblichen Platz- und Gewichtsbedarf.

Neben optisch arbeitenden Systemen sind auch sogenannte Lidarsysteme bekannt. Derartige Systeme messen nur den Abstand des vorausfahrenden Fahrzeuges. Die Relativgeschwindigkeit wird über die zeitliche Ableitungen der Abstandsänderung ermittelt. Dies hat aufgrund der auftretenden Zeitverzögerung Komfort- und Sicherheitseinbußen zur Folge.

Einfacher aufgebaut sind Radarsensoren, die eine direkte Abstands- und Relativgeschwindigkeitsmessung erlauben.

Solche Radarsensoren überstreichen einen gewissen Winkelbereich vor dem Bezugsfahrzeug und erlauben auch eine Bestimmung des Sichtwinkels a zum vorausfahrenden Fahrzeug.

Aus der Patentschrift US 5,699,040 ist ein System zur Verhinderung von Fahrzeugkollisionen bekannt, welches aufgrund von longitudinalen und lateralen Distanzmessungen die Wahrscheinlichkeit eines Zusammenstoßes mit einem vorausfahrenden Fahrzeug berechnet. Dabei hängt die Wahrscheinlichkeit eines Zusammenstoßes nicht nur von der Änderung der longitudinalen Distanz, sondern auch von der Größe der lateralen Distanz ab. Wird eine hohe Wahrscheinlichkeit eines Zusammenstoßes erkannt, unterstützt das System die Aktionen des Fahrers, indem es abbremst und ausweicht. Die US 5,699,040 wurde zur Formulierung des Oberbegriffs des Patentanspruchs 1 verwendet.

Auf mehrspurigen Straßen (Autobahnen) ergeben sich häufig folgende Verkehrssituationen. Fahrzeug A (Bezugsfahrzeug) fährt mit hoher Geschwindigkeit auf der Überholspur. Ein relativ langsam vorausfahrendes Fahrzeug B setzt zum Überholvorgang an. Die Abstandsregelungsanlage erkennt die "drohende Gefahr" durch das Fahrzeug B und leitet automatisch einen Bremseingriff ein. Der Fahrer von Fahrzeug A und auch die übrigen Verkehrsteilnehmer nehmen diese Verkehrssituation wahr und können sich auf sie einstellen. Aufgrund der Regelung hält Fahrzeug A ausreichend Sicherheitsabstand zu Fahrzeug B.

Bei einer anderen Verkehrssituation fährt Fahrzeug A wiederum mit hoher Geschwindigkeit auf der Überholspur. Das vorausfahrende, langsame Fahrzeug B schwenkt in eine Linkskurve ein, behält aber seine ursprüngliche Fahrspur bei. Eine Abstandsregelungsanlage wie beispielsweise beschrieben in der Patentschrift US 5,699,040 würde fälschlicherweise ein langsam fahrendes Fahrzeug in direkter Linie vor Fahrzeug A erkennen und deshalb einen automatischen Bremseingriff einleiten. Dieser Bremseingriff folgt für den Fahrer von Fahrzeug A und auch für die übrigen Verkehrsteilnehmer äußerst überraschend. Eine Notwendigkeit hierfür besteht offensichtlich nicht, da die Fahrspur vor Fahrzeug A offensichtlich "frei" ist.

Ein solcher Bremseingriff stellt deshalb eine erhebliche Verkehrsgefährdung insbesondere des nachfolgenden Verkehrs dar. Er wäre nur dann vermeidbar, wenn der Abstandsregelungsanlage zusätzliche Informationen über den, vor dem Bezugsfahrzeug A liegenden Fahrbahnverlauf vorliegen würden und die Abstandsregelungsanlage darüber auf die Fahrsituation Kurvenfahrt schließen könnte. Dies ist aber mit einfachen Mitteln nicht möglich. Insbesondere bei optischen Systemen wäre hierfür, wie bereits erwähnt, eine aufwendige Bildverarbeitung nötig. Aufgabe der vorliegenden Erfindung ist es, ein Verfahren zur Steuerung einer Abstandsregelungsanlage anzugeben, das allein aus dem Fahrverhalten des vorausfahrenden Fahrzeugs zwischen den Fahrsituationen Überholvorgang und Kurvenfahrt des vorausfahrenden Fahrzeugs unterscheidet und damit eine Verkehrsgefährdung durch einen unnötigen Bremseingriff vermeidet.

Gelöst wird diese Aufgabe durch die im Anspruch 1 angegebenen Merkmale.
Vorteilhafte Weiterentwicklungen der Erfindung sind in den Unteransprüchen angegeben.
Die wesentliche Idee der Erfindung besteht darin, aus dem Sichtwinkel $\alpha$ und dem Abstand D, die Quergeschwindigkeit Geschwindigkeit senkrecht zur Fahrtrichtung des Bezugsfahrzeuges ) und den seitlichen Versatz ( senkrechter Abstand zur extrapolierten Fahrstrecke ) des vorausfahrenden Fahrzeugs zu bestimmen und in einer Steuereinheit auszuwerten. Als Kriterium für einen Überholvorgang dient die Quergeschwindigkeit, die ab einem gewissen seitlichen Versatz zwingend wieder abnehmen muß. Eine zunehmende Quergeschwindigkeit dient als Kriterium für eine Kurvenfahrt. Ein Bremseingriff erfolgt nur, wenn ein Überholvorgang des vorausfahrenden Fahrzeugs vorliegt.

Nachfolgend ist das erfindungsgemäße Verfahren anhand eines Ausführungsbeispiels in der Zeichnung näher dargestellt. Es zeigen

**Fig. 1** Blockschaltbild einer Abstandsregelungsanlage

**Fig. 2** schematische Darstellung eines Überholfahrt

**Fig. 3** schematische Darstellung einer Kurvenfahrt

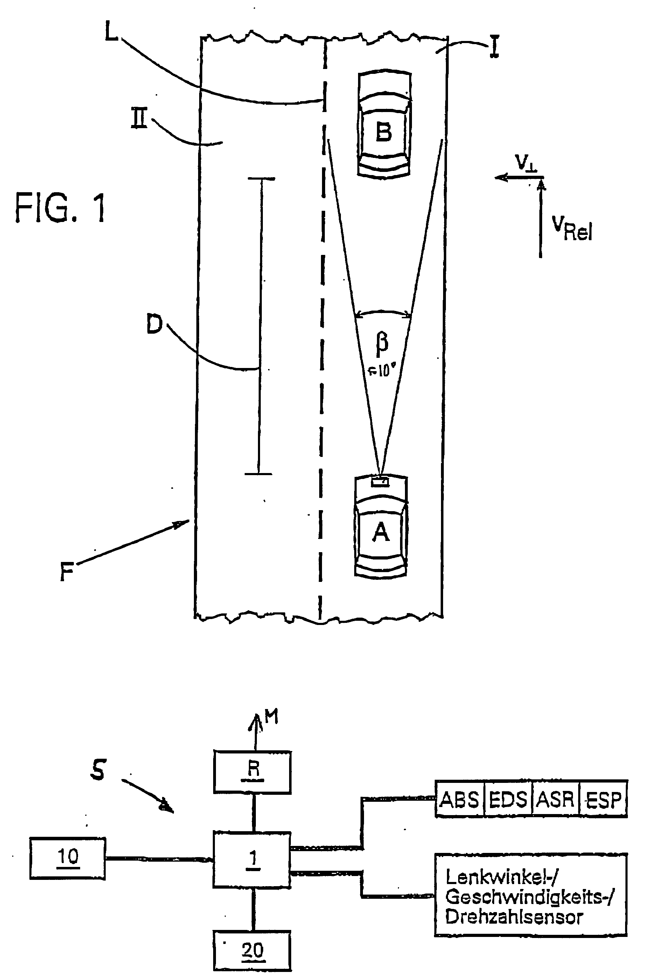

Fig. 1 zeigt eine Fahrbahn F mit zwei durch eine Mittellinie L getrennte Fahrspuren I und II, wobei die Fahrspur II im folgenden als Überholspur bezeichnet wird. Auf der Fahrspur I sind zwei Fahrzeuge A und B jeweils schematisch angedeutet. Das Bezugsfahrzeug A weist eine Abstandsregelungsanlage 5 auf, die ebenfalls schematisch dargestellt ist.
Die Abstandsregelungsanlage 5 umfaßt einen Radarsensor R, der einen Winkelbereich von ca. $\beta=10°$ überdeckt. Das Meßsignal M des Radarsensors R wird einer Steuereinheit 1 weitergeleitet, die aus dem Meßsignal M den Abstand D zwischen Fahrzeug A und B, die Relativgeschwindigkeit $V_{Rel} = \frac{dD}{dt}$ den Sichtwinkel $\alpha$ (hier $\alpha = 0$), den Versatz $\delta$ (hier $\delta=0$) und die Quergeschwindigkeit $V_\perp = \frac{d\delta}{dt}$. bestimmt. In der Steuereinheit 1 sind die Sicherheitsabstände für unterschiedliche Geschwindigkeiten abgelegt bzw. werden jeweils neu berechnet.
Die Steuereinheit 1 ist mit einem Motormomentstellglied 10 (z. B. Drosselklappenverstelleinheit), einem Bremsstellglied 20, sowie einer Vielzahl weiterer Sensoren (z. B. für Lenkwinkel, Geschwindigkeit, Querbeschleunigung, Motordrehzahl, Raddrehzahl) und Aktoren ( z.B. für das Antiblockiersystem, die elektronische Differentialsperre etc.), die nicht näher beschrieben sind, verbunden. Mit Hilfe der beiden Stellglieder 10 und 20 läßt sich die Eigengeschwindigkeit des Fahrzeuges A verringern.

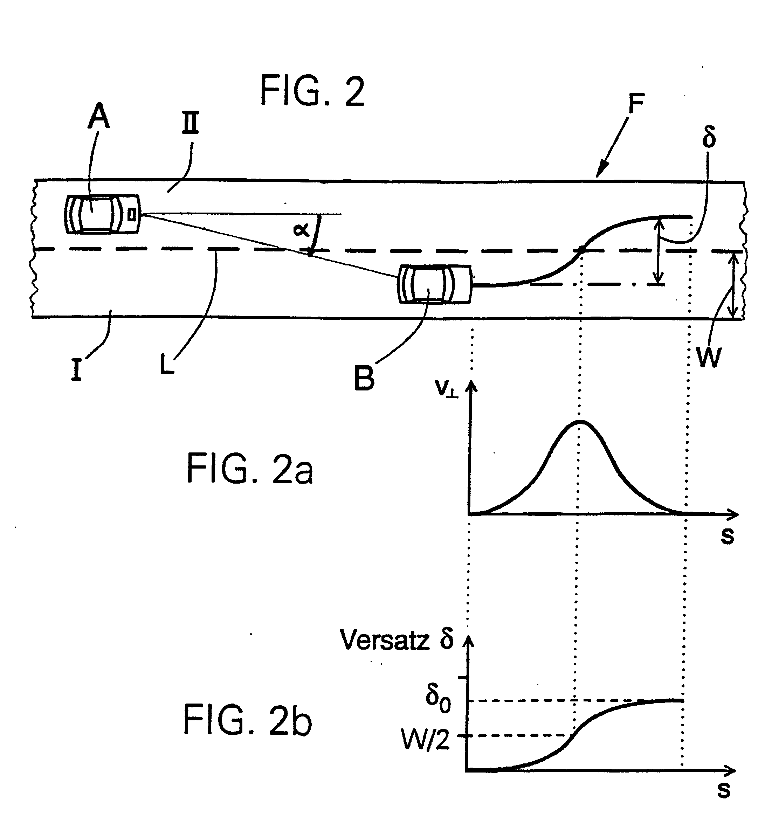

Fig. 2 zeigt einen Überholvorgang des Fahrzeuges B in schematischer Darstellung auf einer etwa geradlinig verlaufenden Fahrbahn F. Zu Beginn des Überholvorgangs nimmt die Geschwindigkeit $V_\perp$ langsam zu, und erreicht etwa beim Überqueren der Mittellinie L ihren Maximalwert. Anschließend nimmt die Quergeschwindigkeit $V_\perp$ wieder ab, um am Ende des Überholvorgangs den Wert $V_\perp = 0$ anzunehmen (Fig. 2a). Die Fahrbahnbreite ist mit W bezeichnet, der etwa der maximale Versatz $\delta_0$ entspricht. Dieser skizzierte Kurvenverlauf wird in der Steuereinheit 1 des Fahrzeugs A aufgenommen und ausgewertet.
In Fig. 2b ist der Verlauf des Versatzes $\delta$ als Funktion des zurückgelegten Weges s dargestellt. Die extrapolierte
Fahrstrecke von Fahrzeug B ist strichpunktiert gezeichnet. Am Punkt $\delta= W/2$ etwa beim Überqueren der Mittellinie L erreicht die Quergeschwindigkeit $V_\perp$ ihren Maximalwert.

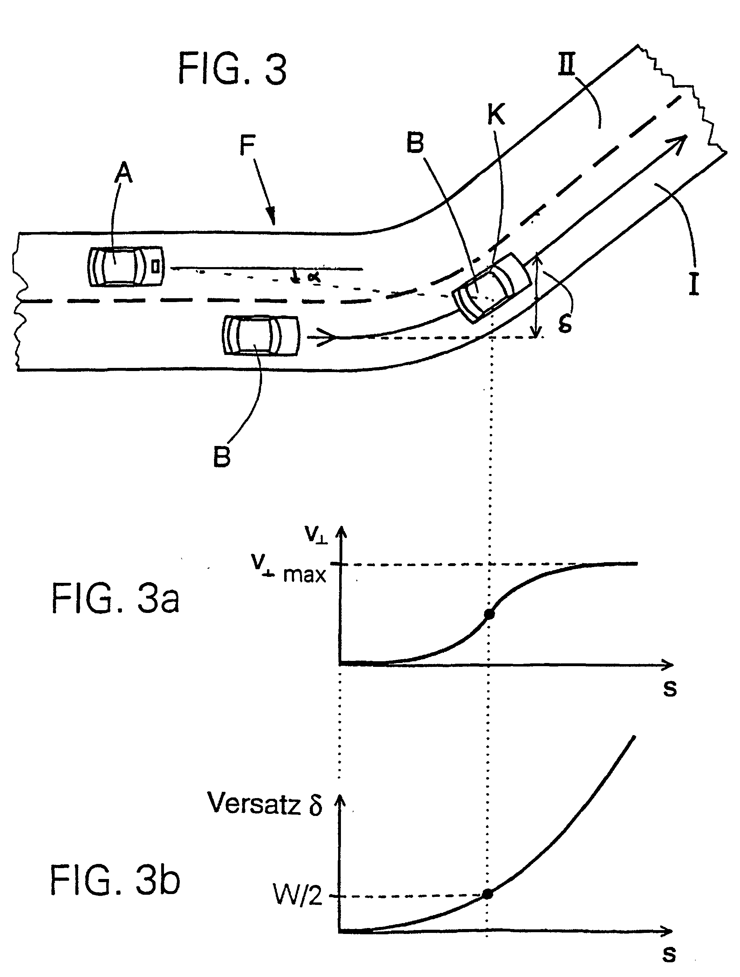

Fig. 3 zeigt eine zweite Verkehrssituation mit einem kurvigen Verlauf der Fahrbahn F, wobei der Kurvenradius übertrieben dargestellt ist. Beim Einfahren in die Kurve ändert sich die Quergeschwindigkeit $V_\perp$ des Fahrzeugs B und nimmt nach einer gewissen Wegstrecke einen Maximalwert $V_{\perp max}$ an. Gleichzeitig nimmt der Versatz stetig zu. Diese Kurvenverläufe werden ebenfalls in der Steuereinheit 1 des Fahrzeugs A aufgenommen und ausgewertet.
Nimmt die Quergeschwindigkeit $V_\perp$ bei einem Versatz von $\delta= W/2$ (Punkt K) zu, so dient dies als Kriterium für eine Kurvenfahrt des Fahrzeugs B. Ein Bremseingriff ist hier unabhängig vom Abstand und der Relativgeschwindigkeit nicht notwendig.
Da das erfindungsgemäße Verfahren nur bei mehrspurigen Fahrstraßen Anwendung findet, wird aus den Meßwerten Lenkwinkel und Geschwindigkeit etc. z. B. aufgrund der bisher aufgetretenen maximalen Kurvenradien bestimmt, ob es sich bei dem momentan befahrenen Fahrbahnabschnitt um eine mehrspurige Fahrstraße handelt.
Es besteht auch die Möglichkeit diese Information aus an sich bekannten Navigationssystemen zu gewinnen. Wesentlich für das erfindungsgemäße Verfahren ist eine frühzeitige Unterscheidung zwischen den beiden Fahrsituationen Überholvorgang bzw. Kurvenfahrt, da nur bei einer frühzeitigen und sicheren Entscheidung entsprechende Gegenmaßnahmen rechtzeitig eingeleitet werden können.

Nur dadurch ergibt sich eine Entlastung des Fahrers, die durch die automatische Abstandsregelungsanlage herbeigeführt werden soll. Bei einer relativ raschen Annäherung von $V_{Rel}$ = -20 m/s und einer Reichweite des Radarsensors von ca. 200 m, würde eine Kollision ohne Abbremsung nach 10 Sekunden erfolgen.

Aus dem Vergleich von Fig. 2a und Fig. 3a ergibt sich folgendes Kriterium zur Unterscheidung zwischen einer Überholfahrt und einer Kurvenfahrt eines vorausfahrenden Fahrzeuges B.

Bei einem Versatz von $\delta$ = W/2 muß bei einer Überholfahrt die Änderung der Quergeschwindigkeit $V_\perp$ Null sein. Bei einer Kurvenfahrt nimmt die Quergeschwindigkeit bei $\delta$ = W/2 dagegen zu d.h. die Änderung der Quergeschwindigkeit $V_\perp$ muß positiv sein.

Als weiteres Kriterium für eine Überholfahrt kann das Maximum der Quergeschwindigkeit bei $\delta$ = W/2 dienen. Hierfür ist aber zumindest die Bildung einer weiteren Ableitung notwendig.

Dadurch, daß bei dem erfindungsgemäßen Verfahren die Entscheidung bereits bei einem Versatz $\delta$ von ca. W/2 erfolgen kann, läßt sich bereits frühzeitig eine sichere und eindeutige Unterscheidung zwischen einem Überholvorgang und einer Kurvenfahrt treffen.

Wird auf einen Überholvorgang des vorausfahrenden Fahrzeugs B geschlossen, so werden falls notwendig die entsprechenden Bremsmaßnahmen eingeleitet. Wichtig ist immer eine möglichst frühzeitige Entscheidung für oder gegen einen Bremseingriff durch die Steuereinheit 1, um eine notwendige Geschwindigkeitänderung so wenig abrupt wie möglich auszuführen.

Jede spätere Entscheidung, z.B. nach einer eindeutigen Erkennung von Fahrzeug B auf der Fahrspur II mit $V_\perp$=0, würde eine vermeidbare Zeitverzögerung für die Entscheidung Bremseingriff ja oder nein bedeuten.

Je nach Stärke des Bremsvorganges, kann auch ein Hinweis für den Fahrer erfolgen. Dieser Hinweis kann optisch oder akustisch erfolgen. Falls auf eine Kurvenfahrt des vorausfahrenden Fahrzeugs B geschlossen wird, sind keine weiteren Maßnahmen notwendig. Trotzdem kann auch hier zur Kontrolle eine Information des Fahrers von Vorteil sein.

Bei dem erfindungsgemäßen Verfahren wird zwischen den beiden Fahrsituationen Überholfahrt und Kurvenfahrt des vorausfahrenden Fahrzeuges B unterschieden und so ein unnötiger Bremseingriff bei einer Kurvenfahrt vermieden.

## Patentansprüche

1. Verfahren zur Steuerung einer Abstandsregelungsanlage für ein Kraftfahrzeug, bei dem der Abstand D, die Relativitätsgeschwindigkeit $V_{REL}$, der Sichtwinkel $\alpha$ und der Versatz $\delta$ eines vorausfahrenden Kraftfahrzeugs B relativ zu einem Kraftfahrzeug A bestimmt werden und eine Abbremsung des Kraftfahrzeugs A mittels der Abstandsregelungsanlage erfolgt,
**dadurch gekennzeichnet, dass**
die Abbremsung in Abhängigkeit der Fahrsituation Überholfahrt und Kurvenfahrt des vorausfahrenden Kraftfahrzeugs B erfolgt und zur Unterscheidung zwischen den Fahrsituationen Überholfahrt und Kurvenfahrt des vorausfahrenden Kraftfahrzeugs B die Quergeschwindigkeit $V_\perp$ des vorausfahrenden Kraftfahrzeugs B bestimmt wird und als Unterscheidungskriterium die Änderung der Quergeschwindigkeit $V_\perp$ bei einem Versatz von etwa $\delta$ = W/2 ausgewertet wird, wobei W die Fahrbahnbreite ist.

2. Verfahren nach Anspruch 1, **dadurch gekennzeichnet, dass** auf Überholfahrt geschlossen wird, falls die Änderung der Quergeschwindigkeit $V_\perp$ bei einem Versatz von etwa $\delta$ = W/2 Null ist.

3. Verfahren nach Anspruch 1, **dadurch gekennzeichnet, dass** auf Kurvenfahrt geschlossen wird, falls die Änderung der Quergeschwindigkeit $V_\perp$ bei einem Versatz von etwa $\delta$ = W/2 positiv ist.

4. Verfahren nach Anspruch 1 oder 2, **dadurch gekennzeichnet, dass** auf Überholfahrt geschlossen wird, falls die Quergeschwindigkeit $V_\perp$ bei einem Versatz von etwa $\delta$ = W/2 maximal ist.

5. Verfahren nach einem der vorhergehenden Ansprüche, **dadurch gekennzeichnet, dass** vor einer Abbremsung ein Warnhinweis für den Fahrer erfolgt.

6. Verfahren nach einem der Ansprüche 1 bis 4, **dadurch gekennzeichnet, dass** bei einer Überholfahrt ein Hinweis für den Fahrer erfolgt.

## Claims

1. Method for controlling a headway regulation system for a vehicle wherein the distance D, relative speed $V_{REL}$, viewing angle $\alpha$ **and offset** $\delta$ of a preceding vehicle B relative to a vehicle A are determined and the vehicle A is braked by means of the headway regulation system,
**characterized in that**
braking depends on the driving situation i.e. overtaking or cornering of the preceding vehicle B, and in order to make the distinction between overtaking and cornering driving situations of the preceding vehicle B, the lateral velocity $V_\perp$ of the preceding vehicle B is determined and the variation in lateral velocity $V_\perp$ at an offset of say $\delta$ = W/2 is evaluated as the distinguishing criterion, where W is the width of the lane.

2. Method according to Claim 1, **characterized in that** overtaking is inferred if the variation in lateral velocity $V_\perp$ at an offset of say $\delta = W/2$ is nil.

3. Method according to Claim 1, **characterized in that** cornering is inferred if the variation in lateral velocity $V_\perp$ at an offset of say $\delta = W/2$ is positive.

4. Method according to Claim 1 or Claim 2, **characterized in that** overtaking is inferred if the lateral velocity $V_\perp$ is maximal at an offset of say $\delta = W/2$.

5. Method according to any one of the preceding claims, **characterized in that** the driver is given a warning prompt before braking occurs.

6. Method according to any one of Claims 1 to 4, **characterized in that** the driver is given a prompt in the case of overtaking.

**Revendications**

1. Procédé de commande d'un appareil de contrôle de distance pour un véhicule automobile, dans lequel on détermine la distance D, la vitesse relative $V_{REL}$, l'angle de champ d'observation $\alpha$ et le déport $\delta$ d'un véhicule automobile B précédent par rapport à un véhicule A, et un freinage du véhicule automobile A s'effectuant à l'aide de l'appareil de contrôle de distance,
   **caractérisé en ce que**
   le freinage s'effectue en fonction de la situation de roulage, qu'il s'agisse d'un roulage en dépassement et d'un roulage en virage du véhicule automobile B roulant en position avant et, pour distinguer entre les situations roulage que sont le roulage en dépassement et le roulage en virage du véhicule B roulant en position avant, on détermine la vitesse transversale $V_\perp$ du véhicule B roulant en position avant, et on évalue, à titre de critère de distinction, quelle est la variation de vitesse transversale $V_\perp$ pour un déport d'environ $\delta = W/2$, W étant la largeur de la piste de doublage.

2. Procédé selon la revendication 1, **caractérisé en ce que** l'on conclue qu'il s'agit d'un roulage en dépassement, dans le cas où la variation de la vitesse transversale $V_\perp$ est nulle, lorsque le déport est d'environ $\delta = W/2$.

3. Procédé selon la revendication 1, **caractérisé en ce que** l'on conclue qu'il s'agit d'un roulage en virage dans le cas où la variation de la vitesse transversale $V_\perp$ est positive, lorsque le déport est d'environ $\delta = W/2$.

4. Procédé selon la revendication 1 ou 2, **caractérisé en ce qu'**on conclue qu'il s'agit d'un roulage en dépassement, dans le cas où la vitesse transversale $V_\perp$ est maximale, lorsque le déport est d'environ $\delta = W/2$.

5. Procédé selon l'une des revendications précédentes, **caractérisé en ce qu'**un avertissement est envoyé au conducteur avant de procéder à un freinage.

6. Procédé selon l'une des revendications 1 à 4, **caractérisé en ce qu'**un avertissement est envoyé au conducteur dans le cas d'un roulage avec dépassement.

FIG. 1

FIG. 2

FIG. 2a

FIG. 2b

# FIG. 3

## FIG. 3a

## FIG. 3b